# EUROPEAN PATENT SPECIFICATION

(11) **EP 4 588 547 B1**
(45) Date of publication and mention of the grant of the patent: **09.12.2026**
(21) Application number: 24162836.1
(22) Date of filing: 12.03.2024
(51) Int. Cl.: B01D 29/96, B01D 35/30, B01D 35/153, C02F 1/00

(54) **A QUICK CONNECT FILTER ASSEMBLY**
SCHNELLVERBINDUNGSFILTERANORDNUNG
ENSEMBLE FILTRE À CONNEXION RAPIDE

(30) Priority: 17.01.2024 CN 202420114981 U
(43) Date of publication of application: 23.07.2025
(73) Proprietor: Geberit International AG, 8645 Jona (CH)
(72) Inventor: ZHOU, Junfeng, Shanghai, 201802 (CN); DAI, Cong, Shanghai, 201802 (CN)
(74) Representative: Szynka Smorodin Patentanwälte Partnerschaft mbB

(56) References cited:
- EP-B1- 2 726 169
- CN-A- 115 155 131
- CN-U- 213 492 386
- KR-Y1- 200 384 558

## Description

### Field of Technology

The present invention relates to a filter assembly, especially to a quick connect filter assembly,

### Background Technology

At present, filters are widely used. Notably, the filter element in a filter system is limited to a certain service life and needs to be replaced periodically. A filter element generally has at least one water inlet end and one water outlet end. When used, these two ends need to be connected to the water inlet and outlet channels of the filter element mounting base, and the connection needs to be sealed reliably without leakage. At present, during the replacement of a filter element of commercially available products, it is always necessary to close the main water inlet valve of the filter, so as to prevent a large amount of water from spraying out of the filter element mounting base after the filter element is removed, thus wetting the floor. Although the filter element can be replaced in this way, the filter element replacement process is relatively cumbersome, requiring users to have certain professional competence. It is inevitable that there will be a certain percentage of users that may fail to close a water inlet angle valve due to misoperation.

The prior art Patent No. CN104941268B and Patent No. CN208482110U can replace a filter element without closing the angle valve to some extent. However, the products are relatively complex in structure. In addition to the rotating part that needs to be sealed with the water inlet and outlet ends of the filter element, the base assembly also needs to comprise the seal for the rotating part and the base body. The seal between the rotating part and the base body is a motion seal, with relatively high manufacturing requirements for both parts and a relatively high risk of leakage. Moreover, the filter element replacement process also needs to rotate this rotating part, which will require a certain amount of torque to overcome the friction at the dynamic seal. The rotation also causes wear at the dynamic seal, and after a certain number of rotations may also cause water leakage at this dynamic seal.

Further prior art examples of filter systems can be found in CN 213 492 386 U showing the features of the preamble of claim 1, EP 2 726 169 B1, KR 200 384 558 Y1, and CN 115 155 131 A.

### Content of the Invention

The present invention aims to solve the above problem by providing a filter assembly that is convenient for filter element replacement, simple in structure, easy to assemble and disassemble, and able to guarantee water tightness.

The present invention is defined in Claim 1. Preferred embodiments are defined in the dependent claims.

The beneficial effects of the present invention are:
When the filter assembly is in operation, the filter element is placed inside the cartridge. By rotatably connecting the first threaded structure of the surrounding wall on the base body and the second threaded structure on the outer side of the cartridge cover, the first water passage and the second water passage on the base body are separately connected to the first filter channel and the second filter channel on the cartridge. When the filter assembly is not in operation, it is only necessary to rotate the cartridge cover and take out the filter element directly. The one-way valve assembly is shut off to prevent water leakage. It is unnecessary to disassemble the base body and the cartridge, which is convenient and efficient.

### Description of Drawings

A detailed description is further made to the present invention below in combination with the drawings, relating to a specific embodiment.
- FIG. 1: is a structural schematic diagram of the base body in the embodiment of the present invention;
- FIG. 2: is a structural schematic diagram of the cartridge and the cartridge cover in the embodiment of the present invention;
- FIG. 3: is a cross-sectional schematic diagram of the filter assembly in the embodiment of the present invention;
- FIG. 4: is a in part cross-sectional schematic diagram of the cartridge, showing in particular a fracture in the first threaded structure in the embodiment of the present invention;
- FIG. 5: is a cross-sectional structural schematic diagram of the base body and in particular of the second threaded structure in the embodiment of the present invention;
- FIG. 6: is a top-view structural schematic diagram of the base body in the embodiment of the present invention;

Reference numerals in the drawings: 1. cartridge; 11. first filter channel; 12. second filter channel; 2. base body; 21. base; 211. guide groove; 212. guide protrusion; 22. surrounding wall; 221. transitional staircase structure; 23. first water passage; 231. first passage; 232. second passage; 233. third passage; 234. inclined surface; 24. second water passage; 241. matching block; 25. second threaded structure; 3. cartridge cover; 31. first threaded structure; 311. fracture; 4. one-way valve assembly; 41. push rod; 42. stop block; 43. first sealing ring; 44. fixed support; 45. spring; 5. second sealing ring; 6. third sealing ring.

### Detailed Description of the Preferred Embodiment

A detailed description is further made to the technical solution for the present invention below in combination with the specific embodiment.

An embodiment of the present invention is described in detail below, and exemplary views of the embodiment are shown in the drawings. Notably, reference numbers that are same or similar throughout refer to same or similar components or components with identical or similar functions. Embodiments described below by referring to the drawings are exemplary, are used only for interpreting the present patent application and are not to be construed as restrictions to the present patent application.

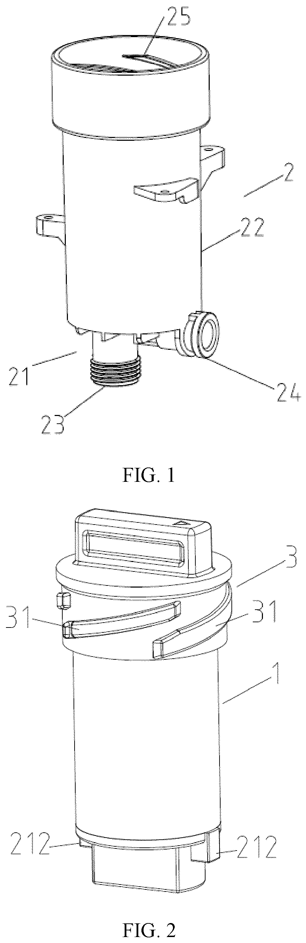

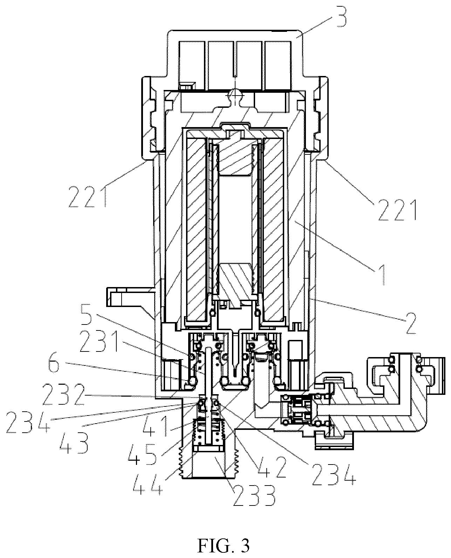

In FIGS. 1, 2 and 3, a quick connect filter assembly comprising a cartridge 1 and a base body 2 is shown. A cavity accommodating a filter element is provided in the middle of the cartridge 1. A first filter channel 11 and a second filter channel 12 are provided at the lower end of the cartridge 1. A cartridge cover 3 is provided at the upper part and used for snap-fitting to the upper part of the cartridge. In the present embodiment, the cartridge is a prefabricated part with its top and bottom closed. Its lower end comprises the structure of the first filter channel and the second filter channel. In the production of the cartridge, this structure can be disassembled for installing a filter element. After installing the filter element assembly in the cartridge, the lower end structure is assembled by welding.

A first threaded structure 31 is provided on the outer wall of the cartridge cover 3. The base body 2 is a hollow cavity, comprising a base 21 and an upwardly extending surrounding wall 22. A first water passage 23 and a second water passage 24 are provided on the base 21. A one-way valve assembly 4 is provided in the first water passage 23 and the second water passage 24. A second threaded structure 25 is provided on the inside of the upper part of the surrounding wall 22. When the filter assembly is in operation, the filter element is placed inside the cartridge 1. The cartridge cover 3 is rotatably connected to the base body 2. The one-way valve assembly 4 is opened by the built-in filter element. The first filter channel 11 is connected to the first water passage 23. The second filter channel 12 is connected to the second water passage 24. When the filter assembly is not in operation, the cartridge is taken out after rotating the base body 2 and the cartridge cover 3. The one-way valve assembly 4 is closed. The first filter channel 11 and the first water passage 23 are closed. The second filter channel 12 and the second water passage 24 are also closed.

In the present example, the base body 2 assembly has a water inlet channel and a water outlet channel, that is, the first water passage 23 and the second water passage 24. A one-way valve assembly 4 is provided inside the first water passage 23. A first filter channel 11 and a second filter channel 12 are provided at the bottom of the cartridge 1, with the filter element mentioned provided inside the cartridge 1 for filtration. When in the water supply state, the first filter channel 11 and the second filter channel 12 are separately connected to the first water passage 23 and the second water passage 24 of the base body 2, with water flowing through. The cartridge cover 3 is provided in the upper part of the cartridge 1, and the two parts can be assembled or disassembled rotatably. In the installation process of the cartridge 1 and the base body 2, the cartridge is installed into the base body directly. By rotating the cartridge cover 3, the cartridge 1 is pressed into the base body 2. The seal of the filter element assembly and the base body 2 assembly are sealed first. As the cartridge is further pressed downward, the internal structure of the cartridge presses the protruding end of the one-way valve assembly 4 structure in the base body 2, with the first water passage opened. Furthermore, a handle structure is also provided at the top of the cartridge cover 3, which facilitates the rotation of the cartridge as a whole, better enabling the cartridge to fully open the one-way valve assembly after being installed in place.

The present application relates to a filter assembly that adopts an upwardly extending surrounding wall 22 of the base body 2, which is rotatably connected to the cartridge cover 3. Users can conveniently take out the cartridge from above only by controlling the connectivity of the cartridge cover 3 and the base body 2, rather than separately remove the lower end of the base body 2 and the bottom of the cartridge, as is required in the prior art. It is not only easy to operate, but also able to effectively prevent water leakage after the cartridge is removed. Compared to the prior art, the operation steps are simple and can be completed by ordinary users, no longer requiring professionals, thus reducing the maintenance cost of the filter assembly.

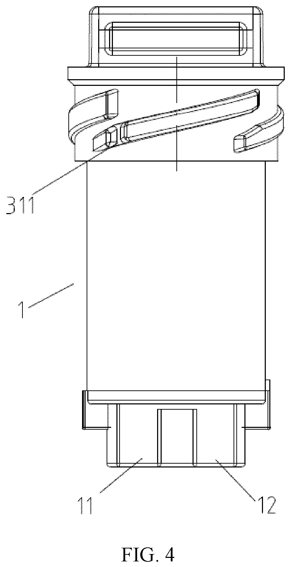

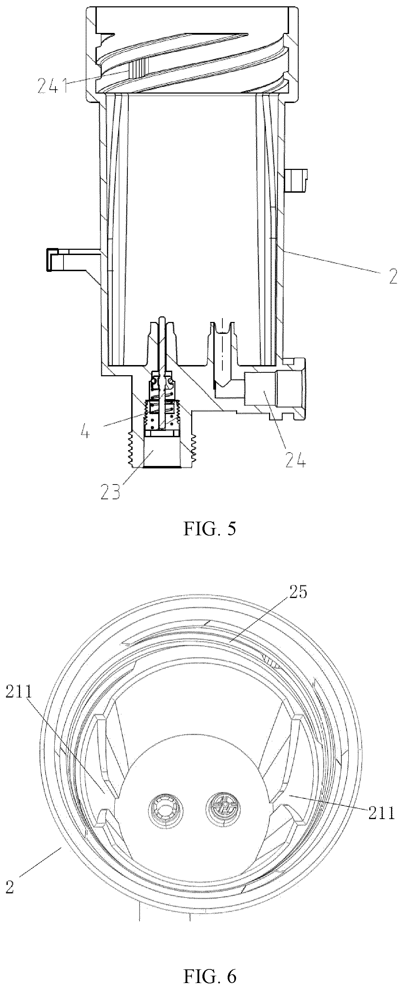

As shown in FIGS. 4 and 5, furthermore, the first threaded structure 31 is multi-threaded or has more than two threads spaced apart from each other, the second threaded structure 25 has a threaded structure matching the first threaded structure 31. There is a fracture 311 on a section of the thread of the first threaded structure 31, and there is a matching block 241 on a section of the thread of the second threaded structure 25. In the present example, to better join the base 21 and the bottom of the cartridge 1 and enable the filter element assembly in the first filter channel 11 to fully open the one-way valve assembly 4, a downward pressure is required. The base body 2 and the cartridge 1 are joined mainly by rotating the base body 2 and the cartridge cover 3. Therefore, by joining the base body 2 and the cartridge cover 3, the fracture 311 and the matching block 241 coincide on the threaded structure. When the cartridge cover 3 and the surrounding wall 22 of the base body 2 rotate by a certain angle, preferentially by 90° in the present embodiment, the rotation stops. In this case, the matching block 241 rotates above the fracture 311. By applying a downward pressure, the cartridge cover 3 is pressed into the surrounding wall 22 of the base body 2. In this case, the bottom of the cartridge 1 is also pressed into the base 21. The one-way valve assembly 4 is opened to connect the first filter channel 11 and the first water passage 23, which can not only open the one-way valve assembly 4 fully, but also better join the present filter assembly.

Furthermore, the diameter of the second threaded structure 25 is greater than that of a lower part of the surrounding wall 22 structure, adopting a transitional staircase structure 211 in the middle. In this embodiment, the second threaded structure 25 on the surrounding wall 22 is oriented toward the inner cavity. To meet the space requirement for joining the cartridge cover 3 and the cartridge 1, adopting the transitional staircase structure 221 allows certain space for the movement of the first threaded structure 31 and the second threaded structure 25 for rotational press-in.

Furthermore, the one-way valve assembly 4 comprises a push rod 41, a stop block 42 provided in the middle part of the push rod 41, and a first sealing ring 43 provided around the stop block 42. A fixed support 44 is provided at the lower end of the push rod 41. The fixed support 44 is connected to the inner wall of the channel fixedly through treads. There is a spring 45 provided between the fixed support 44 and the stopper 42. In the present embodiment, when in the disassembled state, the filter element is separated from the water inlet and outlet channels of the base body 2. Under the action of the spring 45 and the action of water pressure, the one-way valve assembly 4 realizes sealing at its first sealing ring 43.

Furthermore, the first water passage 23 is formed by running through a first passage 231, a second passage 232 and a third passage 233 from top to bottom. The first passage 231 matches with the push rod 41. The top of the push rod 41 is higher than that of the first passage 231. The diameter of the second passage 232 is greater than that of the first passage 231 for resting against the stop block 42 at an inclined surface 234. The inner side of the third passage 233 is provided with internal threads matching the fixed support 44. In the present embodiment, the first water passage 23 adopts a passage connectivity design based on three different diameters. Firstly, it aims to achieve better sealing performance. Secondly, internal threads are provided on the third passage 233, which can disassemble the one-way valve assembly 4 in a simple way by coordinating with the fixed support 44 of the one-way valve assembly 4. After taking out the built-in filter element, by making use of the spring 45 and the action of water pressure, the first sealing ring 43 can rest against the inclined surface 234 to better realize the sealing effect of the first passage 231. The push rod 41 extends beyond the upper wall of the first passage 231 to better contact the filter element assembly, and fully open the one-way valve assembly 4 in working state.

Furthermore, a second sealing ring 5 and a third sealing ring 6 are provided around the water outlet of the cartridge 1. The third sealing ring 6 has a larger cross-sectional area than the second sealing ring 5. In the present embodiment, as the center-to-center distance between the first filter channel and the second filter channel at the bottom of the cartridge is fixed, and the center-to-center distance between the first water passage and the second water passage on the base body is also fixed, tolerances will be caused during installation and docking. To better seal the two parts, it is necessary to make the third sealing ring in the lower part larger in diameter to make up for the tolerances for a better sealing effect.

Furthermore, the bottom inner side of the base body 2 is provided with guide grooves 211, with guide protrusions 212 provided on both sides at bottom of the cartridge 1. The guide protrusions 212 can be vertically embedded/guided in the guide grooves 211. In the present embodiment, the guide protrusions 212 and the guide grooves 211 are provided to prevent the first water passage 23 and the second water passage 24 on the base body 2 from misaligning with the first filter channel 11 and the second filter channel 12 on the cartridge 1, thus preventing errors in joining the water inlet channel and the water outlet channel.

## Claims

1. A quick connect filter assembly, comprising a cartridge (1) and a base body (2), wherein the cartridge (1) is provided with:
- a cavity accommodating a filter element being provided in a middle of the cartridge (1),
- a first filter channel (11) and a second filter channel (12) being provided in a lower end of the cartridge (1),
- a cartridge cover (3) being provided at an upper part of the cartridge and being adapted to be snap-fitted to the upper part of the cartridge (1), wherein the snap-fit connection is configured to allow rotation of the cartridge cover (3) relative to the cartridge (1), and
- a first threaded structure (31) being provided on an outer wall of the cartridge cover (3),
and wherein the base body (2) has a hollow cavity and comprises:
- a base (21) and an upwardly extending surrounding wall (22),
- a first water passage (23) and a second water passage (24) being provided on the base (21),
- a one-way valve assembly (4) being provided inside the first water passage (23) and a further one-way valve assembly being provided inside the second water passage (24), and
- a second threaded structure (25) being provided on an inside of an upper part of the surrounding wall (22), wherein the first threaded structure (31) and the second threaded structure (25) are configured to threadedly engage with each other to rotatably connect the cartridge cover (3) to the base body (2)
**characterized in**
**that**
- an inner side of the base body (2) is provided with at least one guide groove (211),
- at least one guide protrusion (212) is provided on at least one side at a bottom of the cartridge (1), and
- wherein the guide protrusion (212) is configured to be vertically guided in the guide groove (211),
and **that** the quick connect filter assembly is adapted such that,
- when the filter assembly is in operation,
- the filter element is placed inside the cartridge (1),
- the cartridge cover (3) is rotatably connected to the base body (2),
- the one-way valve assembly (4) is opened by the built-in filter element,
- the first filter channel (11) is connected to the first water passage (23),
- the second filter channel (12) is connected to the second water passage (24), and
- when the filter assembly is not in operation,
- the cartridge (1) is removable from the base body (2) by rotating the cartridge cover (3) relative to the base body (2) to disengage the first threaded structure (31) from the second threaded structure (25),
- the one-way valve assembly (4) is closed,
- the first filter channel (11) and the first water passage (23) are closed,
- the second filter channel (12) and the second water passage (24) are also closed.

2. A quick connect filter assembly according to claim 1, wherein the first threaded structure (31) has more than two threads spaced apart from each other, the second threaded structure (25) has a threaded structure matching the first threaded structure (31), and wherein there is a fracture (311) on a section of a thread of the first threaded structure (31), and a matching block (241) on a section of a thread of the second threaded structure (25).

3. A quick connect filter assembly according to claim 1 or 2, wherein a diameter of the surrounding wall (22) to which the second threaded structure (25) is attached is greater than that of a lower part of the surrounding wall structure (22), adopting a transitional staircase structure.

4. A quick connect filter assembly according to one of the preceding claims, wherein the one-way valve assembly (4) comprises a push rod (41), a stop block (42) is provided in the middle part of the push rod (41), and a first sealing ring (43) is provided around the stop block (42), a fixed support (44) is provided at a lower end of the push rod (41), and a spring (45) provided between the fixed support (44) and the stop block (42).

5. A quick connect filter assembly according to claim 4, wherein the first water passage (23) is formed by running through a first passage (231), a second passage (232) and a third passage (233) from top to bottom, wherein the first passage (231) matches with the push rod (41), a top of the push rod (41) being higher than that of the first passage (231), the diameter of the second passage (232) being greater than that of the first passage (231) for resting against the stop block (42) at an inclined surface and the inner side of the third passage (233) is provided with internal threads matching the fixed support (44).

6. A quick connect filter assembly according to one of the preceding claims, wherein a second sealing (5) ring and a third sealing ring (6) are provided around an opening of the first filter channel (11) of the cartridge (1), and wherein the third sealing ring (6) has a larger cross-sectional area than the second sealing ring (5).

7. A method of replacing a filter element in a quick connect filter assembly according to one of the preceding claims, wherein, when the filter assembly is in operation, the filter element is placed inside the cartridge (1), the base body (2) is rotatably connected to the cartridge cover (3),
**characterized in that**
the one-way valve assembly (4) is opened by the built-in filter element, the first filter channel (11) is connected to the first water passage (23), the second filter channel (12) is connected to the second water passage (24), and when the filter assembly is not in operation, the cartridge (1) is taken out after the cartridge cover (3) is rotated relative to the base body (2), the one-way valve assembly (4) is closed, the first filter channel (11) and the first water passage (23) are closed, the second filter channel (12) and the second water passage (24) are also closed.

## Patentansprüche

1. Schnellverbindungsfilteranordnung, umfassend eine Kartusche (1) und einen Grundkörper (2), wobei die Kartusche (1) versehen ist mit:
- einem Hohlraum, der ein Filterelement aufnimmt, welches in einer Mitte der Kartusche (1) vorgesehen ist,
- einem ersten Filterkanal (11) und einem zweiten Filterkanal (12), die in einem unteren Ende der Kartusche (1) vorgesehen sind,
- einer Kartuschenabdeckung (3), die an einem oberen Teil der Kartusche vorgesehen ist und dazu eingerichtet ist, an dem oberen Teil der Kartusche (1) einschnappbar/verrastbar angebracht zu werden, wobei die Schnappverbindung dazu eingerichtet ist, eine Drehung der Kartuschenabdeckung (3) relativ zu der Kartusche (1) zu ermöglichen, und
- einer ersten Gewindestruktur (31), die an einer Außenwand der Kartuschenabdeckung (3) vorgesehen ist,
und wobei der Grundkörper (2) einen hohlen Raum aufweist und umfasst:
- eine Basis (21) und eine sich nach oben erstreckende umgebende Wand (22),
- einen ersten Wasserdurchgang (23) und einen zweiten Wasserdurchgang (24), die an der Basis (21) vorgesehen sind,
- eine Einwegventilanordnung (4), die innerhalb des ersten Wasserdurchgangs (23) vorgesehen ist, und eine weitere Einwegventilanordnung, die innerhalb des zweiten Wasserdurchgangs (24) vorgesehen ist, und
- eine zweite Gewindestruktur (25), die an einer Innenseite eines oberen Teils der umgebenden Wand (22) vorgesehen ist, wobei die erste Gewindestruktur (31) und die zweite Gewindestruktur (25) eingerichtet sind, um miteinander in Gewindeeingriff zu gelangen, um die Kartuschenabdeckung (3) drehbar mit dem Grundkörper (2) zu verbinden,
**dadurch gekennzeichnet,**
**dass**
- eine Innenseite des Grundkörpers (2) mit mindestens einer Führungsnut (211) versehen ist,
- mindestens ein Führungsvorsprung (212) an mindestens einem Schenkel an einem Boden der Kartusche (1) vorgesehen ist, und
- wobei der Führungsvorsprung (212) dazu eingerichtet ist, in der Führungsnut (211) vertikal geführt zu werden,
und **dass** die Schnellverbindungsfilteranordnung derart eingerichtet ist, dass,
- wenn die Filteranordnung in Betrieb ist,
- das Filterelement im Inneren der Kartusche (1) platziert ist,
- die Kartuschenabdeckung (3) drehbar mit dem Grundkörper (2) verbunden ist,
- die Einwegventilanordnung (4) durch das eingebaute Filterelement geöffnet wird,
- der erste Filterkanal (11) mit dem ersten Wasserdurchgang (23) verbunden ist,
- der zweite Filterkanal (12) mit dem zweiten Wasserdurchgang (24) verbunden ist, und
- wenn die Filteranordnung nicht in Betrieb ist,
- die Kartusche (1) von dem Grundkörper (2) entfernbar ist, indem die Kartuschenabdeckung (3) relativ zu dem Grundkörper (2) gedreht wird, um die erste Gewindestruktur (31) von der zweiten Gewindestruktur (25) zu lösen,
- die Einwegventilanordnung (4) geschlossen ist,
- der erste Filterkanal (11) und der erste Wasserdurchgang (23) geschlossen sind,
- der zweite Filterkanal (12) und der zweite Wasserdurchgang (24) ebenfalls geschlossen sind.

2. Schnellverbindungsfilteranordnung nach Anspruch 1, wobei die erste Gewindestruktur (31) mehr als zwei Gewinde aufweist, die voneinander beabstandet sind, die zweite Gewindestruktur (25) eine Gewindestruktur aufweist, die zu der ersten Gewindestruktur (31) passt, und wobei ein Bruch (311) an einem Abschnitt eines Gewindes der ersten Gewindestruktur (31) und ein passender Block (241) an einem Abschnitt eines Gewindes der zweiten Gewindestruktur (25) vorhanden ist.

3. Schnellverbindungsfilteranordnung nach Anspruch 1 oder 2, wobei ein Durchmesser der umgebenden Wand (22), an der die zweite Gewindestruktur (25) angebracht ist, größer ist als der eines unteren Teils der umgebenden Wandstruktur (22), wobei eine Übergangstreppenstruktur angenommen wird.

4. Schnellverbindungsfilteranordnung nach einem der vorhergehenden Ansprüche, wobei die Einwegventilanordnung (4) eine Schubstange (41) umfasst, ein Anschlagblock (42) in dem mittleren Teil der Schubstange (41) vorgesehen ist, und ein erster Dichtungsring (43) um den Anschlagblock (42) vorgesehen ist, eine fixierte Stütze (44) an einem unteren Ende der Schubstange (41) vorgesehen ist, und eine Feder (45) zwischen der fixierten Stütze (44) und dem Anschlagblock (42) vorgesehen ist.

5. Schnellverbindungsfilteranordnung nach Anspruch 4, wobei der erste Wasserdurchgang (23) durch Durchlaufen eines ersten Durchgangs (231), eines zweiten Durchgangs (232) und eines dritten Durchgangs (233) von oben nach unten gebildet ist, wobei der erste Durchgang (231) zu der Schubstange (41) passt, ein Oberteil der Schubstange (41) höher ist als der des ersten Durchgangs (231), der Durchmesser des zweiten Durchgangs (232) größer ist als der des ersten Durchgangs (231), um an dem Anschlagblock (42) an einer geneigten Fläche anzuliegen, und der innere Schenkel des dritten Durchgangs (233) mit Innengewinden versehen ist, die zu der fixierten Stütze (44) passen.

6. Schnellverbindungsfilteranordnung nach einem der vorhergehenden Ansprüche, wobei ein zweiter Dichtungsring (5) und ein dritter Dichtungsring (6) um eine Öffnung des ersten Wasserdurchgangs (23) der Kartusche (1) vorgesehen sind, und wobei der dritte Dichtungsring (6) eine größere Querschnittsfläche aufweist als der zweite Dichtungsring (5).

7. Verfahren zum Austauschen eines Filterelements in einer Schnellverbindungsfilteranordnung nach einem der vorhergehenden Ansprüche, wobei, wenn die Filteranordnung in Betrieb ist, das Filterelement im Inneren der Kartusche (1) platziert ist, der Grundkörper (2) drehbar mit der Kartuschenabdeckung (3) verbunden ist,
**dadurch gekennzeichnet, dass**
die Einwegventilanordnung (4) durch das eingebaute Filterelement geöffnet wird, der erste Filterkanal (11) mit dem ersten Wasserdurchgang (23) verbunden ist, der zweite Filterkanal (12) mit dem zweiten Wasserdurchgang (24) verbunden ist, und wenn die Filteranordnung nicht in Betrieb ist, die Kartusche (1) herausgenommen wird, nachdem die Kartuschenabdeckung (3) relativ zu dem Grundkörper (2) gedreht ist, die Einwegventilanordnung (4) geschlossen ist, der erste Filterkanal (11) und der erste Wasserdurchgang (23) geschlossen sind, der zweite Filterkanal (12) und der zweite Wasserdurchgang (24) ebenfalls geschlossen sind.

## Revendications

1. Ensemble filtre à raccord rapide, comprenant une cartouche (1) et un corps de base (2), dans lequel la cartouche (1) est pourvue :
- d'une cavité recevant un élément filtrant qui est prévue au milieu de la cartouche (1),
- d'un premier canal de filtre (11) et d'un second canal de filtre (12) qui sont prévus dans une extrémité inférieure de la cartouche (1),
- d'un couvercle de cartouche (3) qui est prévu au niveau d'une partie supérieure de la cartouche et qui est adapté pour être encliqueté sur la partie supérieure de la cartouche (1), dans lequel le raccord encliqueté est configuré pour permettre la rotation du couvercle de cartouche (3) par rapport à la cartouche (1), et
- d'une première structure filetée (31) qui est prévue sur une paroi externe du couvercle de cartouche (3),
et dans lequel le corps de base (2) a une cavité creuse et comprend :
- une base (21) et une paroi périphérique s'étendant vers le haut (22),
- un premier passage d'eau (23) et un second passage d'eau (24) qui sont prévus sur la base (21),
- un ensemble soupape unidirectionnelle (4) qui est prévu à l'intérieur du premier passage d'eau (23) et un autre ensemble soupape unidirectionnelle qui est prévu à l'intérieur du second passage d'eau (24), et
- une seconde structure filetée (25) qui est prévue sur un intérieur d'une partie supérieure de la paroi périphérique (22), dans lequel la première structure filetée (31) et la seconde structure filetée (25) sont configurées pour se mettre en prise par filetage l'une avec l'autre pour raccorder de manière rotative le couvercle de cartouche (3) au corps de base (2)
**caractérisé en**
**ce que**
- un côté interne du corps de base (2) est pourvu d'au moins une rainure de guidage (211),
- au moins une saillie de guidage (212) est prévue sur au moins un côté au fond de la cartouche (1), et
- dans lequel la saillie de guidage (212) est configurée pour être guidée verticalement dans la rainure de guidage (211),
et **en ce que** l'ensemble filtre à raccord rapide est adapté de sorte que,
- lorsque l'ensemble filtre est en fonctionnement,
- l'élément filtrant est placé à l'intérieur de la cartouche (1),
- le couvercle de cartouche (3) est raccordé de manière rotative au corps de base (2),
- l'ensemble soupape unidirectionnelle (4) est ouvert par l'élément filtrant intégré,
- le premier canal de filtre (11) est raccordé au premier passage d'eau (23),
- le second canal de filtre (12) est raccordé au second passage d'eau (24), et
- lorsque l'ensemble filtre n'est pas en fonctionnement,
- la cartouche (1) peut être retirée du corps de base (2) en faisant tourner le couvercle de cartouche (3) par rapport au corps de base (2) pour dégager la première structure filetée (31) de la seconde structure filetée (25),
- l'ensemble soupape unidirectionnelle (4) est fermé,
- le premier canal de filtre (11) et le premier passage d'eau (23) sont fermés,
- le second canal de filtre (12) et le second passage d'eau (24) sont également fermés.

2. Ensemble filtre à raccord rapide selon la revendication 1, dans lequel la première structure filetée (31) a plus de deux filetages espacés l'un de l'autre, la seconde structure filetée (25) a une structure filetée correspondant à la première structure filetée (31), et dans lequel il y a une fracture (311) sur une section d'un filetage de la première structure filetée (31), et un bloc correspondant (241) sur une section d'un filetage de la seconde structure filetée (25).

3. Ensemble filtre à raccord rapide selon la revendication 1 ou 2, dans lequel un diamètre de la paroi périphérique (22) à laquelle la seconde structure filetée (25) est fixée est supérieur à celui d'une partie inférieure de la structure de paroi périphérique (22), adoptant une structure en escalier de transition.

4. Ensemble filtre à raccord rapide selon l'une des revendications précédentes, dans lequel l'ensemble soupape unidirectionnelle (4) comprend une tige de poussée (41), un bloc d'arrêt (42) est prévu dans la partie médiane de la tige de poussée (41), et une première bague d'étanchéité (43) est prévue autour du bloc d'arrêt (42), un support fixe (44) est prévu au niveau d'une extrémité inférieure de la tige de poussée (41), et un ressort (45) est prévu entre le support fixe (44) et le bloc d'arrêt (42).

5. Ensemble filtre à raccord rapide selon la revendication 4, dans lequel le premier passage d'eau (23) est formé en passant à travers un premier passage (231), un deuxième passage (232) et un troisième passage (233) de haut en bas, dans lequel le premier passage (231) correspond à la tige de poussée (41), un haut de la tige de poussée (41) étant plus haut que celui du premier passage (231), le diamètre du deuxième passage (232) étant supérieur à celui du premier passage (231) pour reposer contre le bloc d'arrêt (42) au niveau d'une surface inclinée et le côté interne du troisième passage (233) est prévu avec des filetages internes correspondant au support fixe (44).

6. Ensemble filtre à raccord rapide selon l'une des revendications précédentes, dans lequel une seconde bague d'étanchéité (5) et une troisième bague d'étanchéité (6) sont prévues autour d'une ouverture du premier passage d'eau (23) de la cartouche (1), et dans lequel la troisième bague d'étanchéité (6) a une plus grande aire en coupe transversale que la seconde bague d'étanchéité (5).

7. Procédé de remplacement d'un élément filtrant dans un ensemble filtre à raccord rapide selon l'une des revendications précédentes, dans lequel, lorsque l'ensemble filtre est en fonctionnement, l'élément filtrant est placé à l'intérieur de la cartouche (1), le corps de base (2) est raccordé de manière rotative au couvercle de cartouche (3),
**caractérisé en ce que**
l'ensemble soupape unidirectionnelle (4) est ouvert par l'élément filtrant intégré, le premier canal de filtre (11) est raccordé au premier passage d'eau (23), le second canal de filtre (12) est raccordé au second passage d'eau (24), et lorsque l'ensemble filtre n'est pas en fonctionnement, la cartouche (1) est retirée après que le couvercle de cartouche (3) a été tourné par rapport au corps de base (2), l'ensemble soupape unidirectionnelle (4) est fermé, le premier canal de filtre (11) et le premier passage d'eau (23) sont fermés, le second canal de filtre (12) et le second passage d'eau (24) sont également fermés.
